# EUROPEAN PATENT SPECIFICATION

(11) **EP 3 974 691 B1**
(45) Date of publication and mention of the grant of the patent: **19.02.2025**
(21) Application number: 21197996.8
(22) Date of filing: 21.09.2021
(51) Int. Cl.: F16K 11/078, F16K 27/04

(54) **VALVE CARTRIDGE FOR A SANITARY FITTING**
VENTILPATRONE FÜR EINE SANITÄRARMATUR
CARTOUCHE DE SOUPAPE POUR UNE ARMATURE SANITAIRE

(30) Priority: 24.09.2020 DE 102020124929
(43) Date of publication of application: 30.03.2022
(73) Proprietor: ORAS OY, 26100 Rauma (FI)
(72) Inventor: Assenmacher, Bernd, 70567 Stuttgart (DE)
(74) Representative: Ostertag & Partner Patentanwälte mbB

(56) References cited:
- EP-A1- 0 555 615
- AT-B- 405 087
- US-A- 5 806 552
- US-A- 5 893 386
- US-A1- 2009 032 128

## Description

### BACKGROUND OF THE INVENTION

### 1. Field of the Invention

The invention concerns a valve cartridge for a sanitary fitting having
a) a housing main body, which has a longitudinal axis and comprises at least one water connection opening, and
b) a sealing ring for fluid tight sealing of the at least one water connection opening against a cartridge seat of the sanitary fitting.

The invention further concerns a sanitary fitting using such a valve cartridge.

### 2. Description of the Prior Art

It is common knowledge to use valve cartridges in sanitary fittings. Such valve cartridges are separate self-contained components which include all the necessary elements of a valve to provide the valve function of the sanitary fitting. Valve cartridges therefore allow fast maintenance in case of a functional failure of the valve because the valve cartridge may be easily extracted from a base body of the sanitary fitting and exchanged by a new functional valve cartridge.

Furthermore, valve cartridges allow to retrospectively equip a sanitary fitting with different valve functions like e.g. a lever faucet valve, a turning spindle valve, a single lever mixing valve or even a thermostat valve.

Generally, a sanitary fitting which uses a valve cartridge comprises a cartridge seat having a defined interface for connecting water ways of the sanitary fitting with water ways of the valve cartridge. E.g. the cartridge seat comprises a given number of water connection seat openings, e.g. a hot water inlet, a cold water inlet and a mixed water outlet (as seen from the cartridge).

On the other hand, the valve cartridge comprises water connection openings which are arranged complementary to the water connection seat openings such that water may be directed from the sanitary fitting into the valve cartridge and according to the setting of the valve out of the valve cartridge back into the sanitary fitting.

It is also common practice to provide all water connection openings of the valve cartridge on the same side of a housing main body of the valve cartridge. Often the water connection openings point longitudinally away from the bottom of the valve cartridge. In this case, the cartridge may be fastened along its longitudinal axis e.g. by means of a screwable fasten ring into the sanitary fitting. By placing an axial bottom sealing intermediate the valve cartridge and the cartridge seat of the sanitary fitting, the fastening force exerted by the fastening ring at the same time causes a fluid tight sealing of the water connection openings.

Although such an arrangement works under normal conditions, it turned out that in some combinations of sanitary fittings and valve cartridges the bottom sealing may become leaky after some time.

From EP 0 555 615 A1 a valve cartridge is known which comprises a sliding frame as a bottom part. The sliding frame is slidable with respect to rest of the valve cartridge housing. The sliding frame supports separate sealings on both of its opposing sides, namely towards a valve disc above the sliding frame and towards the cartridge seat of the sanitary fitting below the sliding frame. This allows to fix the play within the disc stack and at the same time to provide reasonable sealing against the cartridge seat.

From US 5,806,552 A a valve cartridge is known which comprises an adapter gasket. The adapter gasket may be placed in different orientations between the bottom of the cartridge and the cartridge seat in order to swap the hot and cold water inlet pathways. To this purpose, the adapter gasket is placed in between upper and lower sealings and axially positions itself depending on the fixation force exerted on the cartridge and the involved elasticities of the sealings.

Further valve cartridge sealings are known from US 2009/032128 A1, AT 405 087 B and US 5 893 386 A.

### SUMMARY OF THE INVENTION

It is therefore an object of the present invention to provide a valve cartridge which has a reduced risk for a leaking bottom sealing.

This object is achieved by a valve cartridge according to claim 1.

The inventor has realized that in the arrangement according to the state of the art a varying axial gap exists between the valve cartridge and the cartridge seat of the sanitary fitting because of manufacturing tolerances and the compressibility of the axial bottom sealing. Therefore, pressure hammers within the water lines may transversely displace the axial bottom sealing into this axial gap such that the sealing fails.

The inventor further has realized that it is not possible to provide a fixed confinement structure around the bottom sealing in order to prevent this transversal displacement caused by pressure hammers: Because of the varying gap it is not possible to provide such a confinement structure all across the gap. If the confinement structure would protrude too much from the valve housing the fastening force would not provide enough pressure on the bottom sealing. If the confinement structure would too small in height an axial gap large enough may exist (depending on the manufacturing tolerances) which allows the bottom sealing to be transversely displaced. In particular, parts of the bottom sealing could move radially outward in the gap which causes leakage.

Therefore, the inventor provided a sealing confiner element, which is movable relative to the housing main body such that, in particular during fastening of the valve cartridge inside the sanitary fitting, the sealing confiner element may longitudinally slide like a telescope. This approach allows to transversely confine a sealing ring of the bottom sealing even across a varying gap between a bottom of the housing main body and the cartridge seat, because the sealing confiner element provides a transversal stop for the sealing ring. This restricts transversal, in particular radial, movements of the sealing ring.

A sealing ring in the context of this invention is a compressible sealing structure which surrounds one of the at least water connection openings. Usually, such a sealing ring is formed in one piece, but in the context of this invention the sealing ring may also comprise several pieces as long as this allows sufficient tightness. Furthermore, the bottom sealing ring may substantially have a ring shape. However, the bottom sealing does not necessarily have to be circular. Instead the overall shape of the ring may be oval, kidney-shaped or even a rounded rectangle depending on the shape of the water connection opening. Finally, due to the fact that a cartridge often includes two or three water connection openings, more than one sealing ring may be need and such sealing rings are often integrally formed in one piece and are together referred to as the bottom sealing or bottom sealing unit.

Advantageously, the valve cartridge comprises a number of valve elements within the housing main body, wherein the play of these valve elements can be set independently from a force acting on the sealing ring between the housing main body and the cartridge seat.

A particularly important aspect of the invention is that the bottom surface of the housing main body exerts a force on the sealing ring against the cartridge seat of the sanitary fitting when the valve cartridge is mounted into the sanitary fitting. By providing a housing main body with a rigid bottom surface and inner parts of the valve placed above the bottom surface, inner valve elements like e.g. valve disks are not subjected to this force. Thus, it is possible to provide a given play for the valve elements within the housing main body independent from a mounting force exerted on the housing main body which consequently acts on the sealing ring between the bottom surface of the housing main body and the cartridge seat of the sanitary fitting.

In order to provide sufficient travel distance for the sealing confiner element, the sealing ring may have a substantially rectangular cross section such that the sealing ring looks like a closed ribbon. The longer side of the rectangular cross section then defines the height of the sealing ring. This height may be set in the range from approximately 2 mm to 6 mm, preferably from approximately 3 mm to 5 mm, in particular approximately 4 mm.

The sealing confiner element surrounds the sealing ring in a direction transverse to the longitudinal axis and thereby in particular prevents an outward radial movement of the sealing ring. For this purpose, the sealing confiner element preferably fully surrounds the bottom sealing. However, e.g. in case of several sealing rings in a sealing unit the sealing rings may support each other such that the sealing confiner element is only necessary to prevent outward movements of the outer ring parts.

The sealing confiner element may be substantially formed as a disk having one or more through holes which surround the sealing ring respectively each of the sealing rings.

Preferably however, the sealing confiner element comprises a sleeve part extending longitudinally which transversely confines the sealing ring.

A sleeve part allows more flexibility for the shape of the sealing confiner element. In particular the sealing confiner element may comprise a flat bottom surface from which the sleeve part protrudes towards the housing main body.

Preferably, the housing main body comprises a sealing support ridge protruding longitudinally from a bottom surface of the housing main body, wherein the sealing ring rests on the sealing support ridge and wherein the sealing confiner element longitudinally extends along the sealing ring and at least partially along the sealing support ridge.

This allows that the sealing confiner element or in particular any sleeve part of the sealing confiner element may telescopically slide next to the sealing support ridge when the sealing ring is compressed and the axial gap narrows.

The sealing support ridge may have the same ring shape as the sealing ring and may likewise surround the water connection opening. In particular, the sealing support ridge may comprise a rip having a rectangular cross-section shape.

Alternatively or additionally, the bottom surface of the housing main body could comprise a slit next to the position where the sealing ring rests. The sleeve part of the sealing confiner element could then dip into this slit and thereby restricting any transversal movements of the sealing ring.

Preferably, the housing main body comprises a sleeve part which at least partially surrounds a part, in particular the sleeve part, of the sealing confiner element.

This allows the housing main body to counter-act on the sealing confiner element from the outside which results in absorbing at least a part of the forces involved with a pressure hammer. Thereby the stability is increased and/or the sealing confiner element may be designed with thinner walls.

Preferably, the valve cartridge comprises a biasing mechanism which biases the sealing confiner element away from the housing main body.

This ensures that the varying gap is always bridged by the sealing confiner element independent of the gap height, because the sealing confiner element is biased towards its maximum protruding position. Such a biasing mechanism may for example be implemented by using a small spring which pushes the sealing confiner element away. Alternatively, the sealing confiner element may comprise a small spring tongue providing the biasing force.

Preferably, the valve cartridge comprises at least two water connection openings and a further sealing ring such that the two sealing rings are connected together via an elastic joint and integrally form a sealing unit, and in that the sealing confiner element is configured to at least partially surround each of the two sealing rings.

This facilitates the handling of the valve cartridge, because the sealing unit (also called bottom sealing) may be mounted and/or exchanged in one piece. Accordingly, the sealing confiner element preferably is a one-piece structure which confines all of the sealing rings for all of the water connection openings.

Preferably, the biasing mechanism includes the elastic joint to which a part of the sealing confiner element abuts such that the elastic joint biases the sealing confiner element away from the housing main body.

The elastic joints can provide the necessary biasing force and are already present because of the elastic nature of the sealing material. Therefore, no further spring elements are necessary.

Preferably, the biasing mechanism includes the sealing ring having a radial protruding shoulder and the sealing confiner element having a projection which rests on the shoulder of the sealing ring such that the sealing confiner element is biased away from the housing main body.

This is another approach to make use of the elastic nature of the sealing material in order to provide a biasing mechanism. When the sealing ring is compressed during fastening of the cartridge, the shoulder of the sealing ring retracts and the sealing confiner element may move towards the housing main body. Otherwise the shoulder of the sealing ring pushes against the projection of the sealing confiner element. Preferably, the shoulder of the sealing ring is located on the sealing ring centrally along the longitudinal direction.

Preferably, the housing main body and/or the sealing confiner element comprises a snap structure, which allows to snap the sealing confiner element in a movable but captive manner to the housing main body.

This allows any easy assembly of the valve cartridge. First the bottom sealing is placed against the housing main body of the valve cartridge. Second the sealing confiner element is snapped on the housing main body. Preferably, the sealing confiner elements also retains the sealing ring, in particular the whole sealing unit, on the housing main body, e.g. by overlapping any lugs or joints between two or more sealing rings.

Preferably, the housing main body and/or the sealing confiner element comprises a guiding structure, which is configured to guide the sealing confiner element movement along the longitudinal axis.

This prevents that the sealing confiner element entangles itself because of an inclined movement.

Preferably, the guiding structure comprises a guide pin formed on the housing main body and a corresponding guide hole formed on the sealing confiner element.

Such a guide pin may at the same time be used as an alignment means for the valve cartridge with respect to the cartridge seat of the sanitary fitting.

With respect to the sanitary fitting the object of the invention is achieved by a sanitary fitting comprising a cartridge seat and a valve cartridge as discussed above which may be fluid tightly sealed to the cartridge seat.

### BRIEF DESCRIPTION OF THE DRAWINGS

Various features and advantages of the present invention may be more readily understood with reference to the following detailed description taken in conjunction with the accompanying drawings in which:
- Figure 1: shows a longitudinal section view of a sanitary fitting using a valve cartridge;
- Figure 2: shows a side view of the valve cartridge;
- Figure 3: shows a perspective view from the bottom of the valve cartridge;
- Figure 4: shows a perspective exploded view of the valve cartridge including a housing main body, an axial bottom sealing and a sealing confiner element according to the invention;
- Figure 5: shows a longitudinal section view of a sanitary fitting using a valve cartridge according to a second embodiment;
- Figure 6: shows a detailed view of region B in Figure 5;
- Figure 7: shows a perspective exploded view of the valve cartridge according to the second embodiment;
- Figure 8: shows a longitudinal section view of a sanitary fitting using a valve cartridge according to a third embodiment;
- Figure 9: shows a detailed view of region B in Figure 8;
- Figure 10: shows a perspective exploded view of the valve cartridge according to the third embodiment.

### DETAILED DESCRIPTION OF PREFERRED EMBODIMENTS

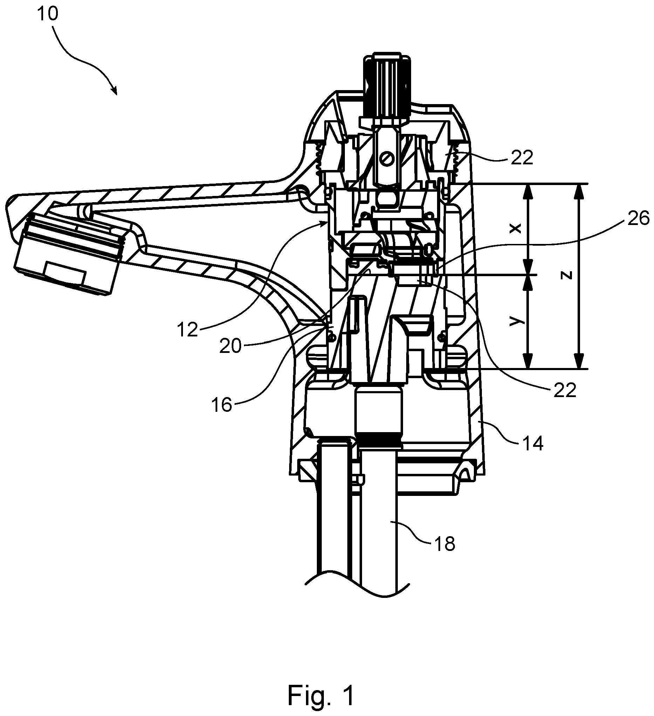

Fig. 1 shows a sanitary fitting 10 which uses a valve cartridge 12 for realizing the actual valve function of the sanitary fitting 10, in this case a single lever mixing valve.

The sanitary fitting 10 comprises a housing 14 and a connection body 16 which on the one hand is connected with hot and cold water supply lines 18. On the other hand the connection body 16 defines a cartridge seat 20, which comprises seat water connection openings 22. As shown in this embodiment, the valve cartridge 12 is then arranged on top of the cartridge seat 20. However, in general the orientation and positioning of the cartridge seat 20 and the valve cartridge 12 depends on the overall shape of the sanitary fitting 10.

In Fig. 1 shown above the valve cartridge 12, a fastening ring 24 is arranged for pressing the valve cartridge 12 against the cartridge seat 20.

For the purpose of a fluid tight connection between the valve cartridge 12 and the cartridge seat 20 a sealing, in particular an axial bottom sealing 26, is arranged intermediate these two components.

The marked distances x, y and z refer to main sources of manufacturing tolerances which influence the axial gap between the valve cartridge 12 and the cartridge seat 20.

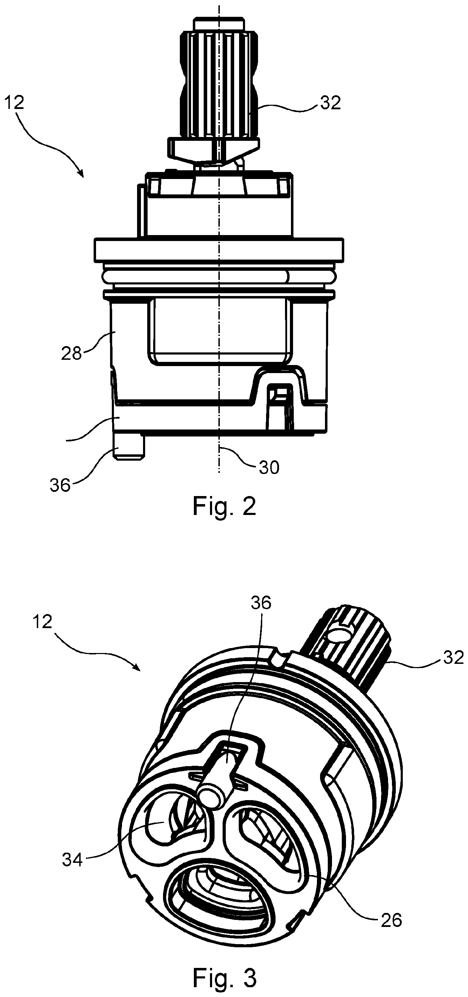

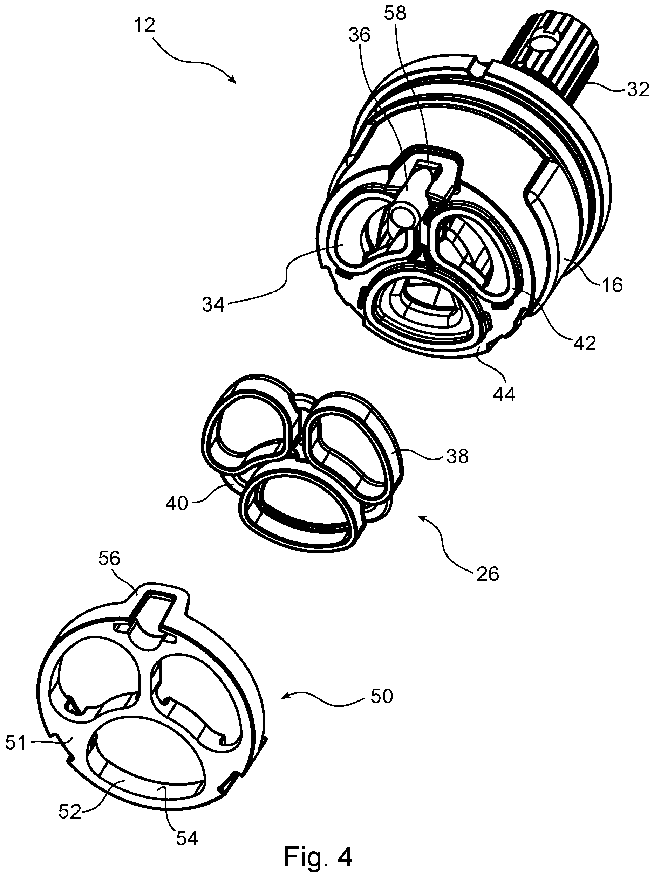

The details of the valve cartridge 12 can be seen from Figs. 2, 3 and 4.

The valve cartridge 12 comprises a housing main body 28 which has a longitudinal axis 30 thereby axially defining a top side to a bottom side of the valve cartridge 12. Furthermore, the exemplary single lever mixing cartridge comprises a lever spindle 32, protruding from the top side of the housing main body 28 which is used to control the opening and mixing setting of the valve cartridge 12.

On its bottom side the valve cartridge 12 comprises in this embodiment three water connection openings 34, wherein two of the three water connection openings 34 are inlets for hot and cold water and the respective third water connection opening 34 is the mixed water outlet. The water connection openings 34 are arranged such that each one aligns with one of the corresponding seat water connection openings 22 of the cartridge seat 22 in the sanitary fitting 10.

In order to properly align the valve cartridge 12 with respect to the cartridge seat 20, the housing base body 28 of this embodiment comprises a positioning pin 36 as an example of an alignment means protruding from the bottom side of the valve cartridge 12. The cartridge seat 20 comprises a corresponding which is arranged off center, in particular near the circumference of valve cartridge 12. The off centered arrangement allows to counter-act any torque forces caused during fastening of the fastening ring 24.

The bottom sealing 26 comprises three sealing rings 38 for each of the water connections openings 34. The sealing rings 38, which each have the shape of a ribbon bend to an oval or kidney-shaped ring are interconnected to each other via elastic joints 40.

The bottom sealing 26 rests on three sealing support ridges 42 which protrude from a bottom surface 44 of the housing main body 16.

Finally, the valve cartridge 12 comprises a sealing confiner element 50 which is substantially disc shaped with a seat side 51 pointing towards the cartridge seat 20 of the sanitary fitting.

The sealing confiner element 50 further comprises three through holes 52 surrounding the shape of each of the sealing rings 38 when the sealing confiner element 50 is attached to the housing main body 16.

Each through hole 52 has a sidewall 54 which surrounds its corresponding sealing ring 38. The sidewall 54 thereby acts as a sleeve which restricts transversal movement of the sealing ring 38.

The sealing confiner element 50 further comprises a snap lug 56 comprising a longitudinally elongated opening which cooperates with a snap projection 58 on the housing main body 16 such that the sealing confiner element 50 is captively attached to housing main body 16 (which means that it cannot detach without dedicated action by the user).

However, because of the elongated opening the sealing confiner element 50 may still move slightly along the longitudinal axis with respect to the housing main body 16.

Nonetheless, the retracting movement of the sealing confiner element 50 towards the housing main body 16 is hindered by the elastic joints 40 to which the sidewalls 54 abut. This elastic joints 40 bias the sealing confiner element 50 away from the bottom surface 44 of the housing main body 16.

The valve cartridge 12 works as follows:
When the valve cartridge 12 is fastened against the cartridge seat 20 of the sanitary fitting 10, the sealing rings 38 get compressed and an axial gap between the bottom surface 44 of the housing main body 16 and the cartridge seat 20 decreases. As soon as the gap height is small enough that the seat side 51 of the sealing confiner element 50 abuts against the cartridge seat 20, the sealing confiner element 50 and the housing main body 16 move further and further together.

This movement is possible because the sidewalls 54 may slide into the clearance next to the protruding sealing support ridges 42 on the bottom surface 44 of the housing main body 16.

When the valve cartridge 12 is finally fastened, the sealing confiner element 50 prevents transversal movements, in particular radially outward movements, of the sealing rings 38, because the sealing rings 38 abut against the sidewalls 54 over the hole longitudinal height of the sealing rings 38.

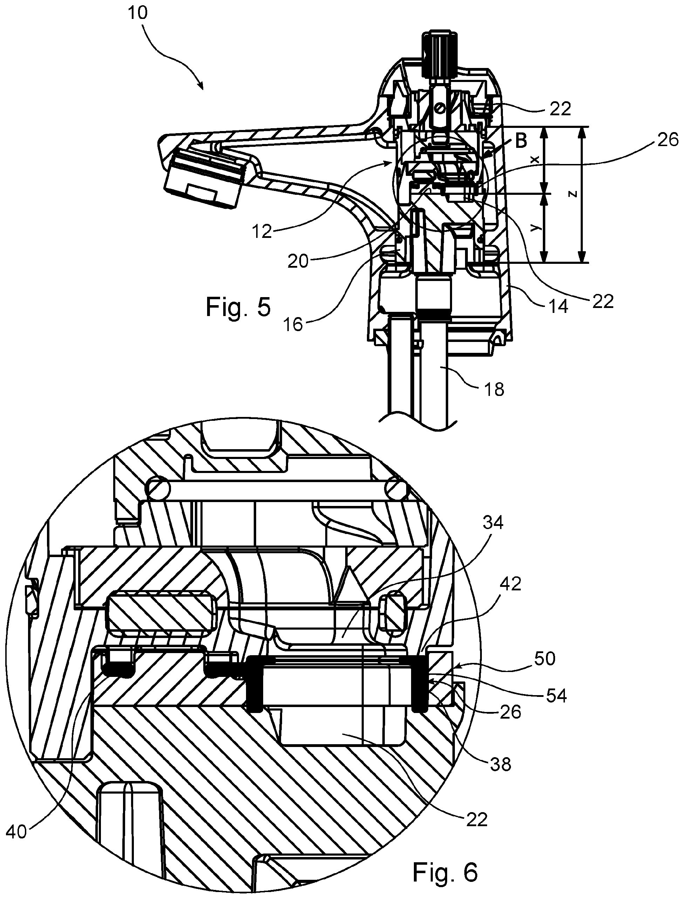

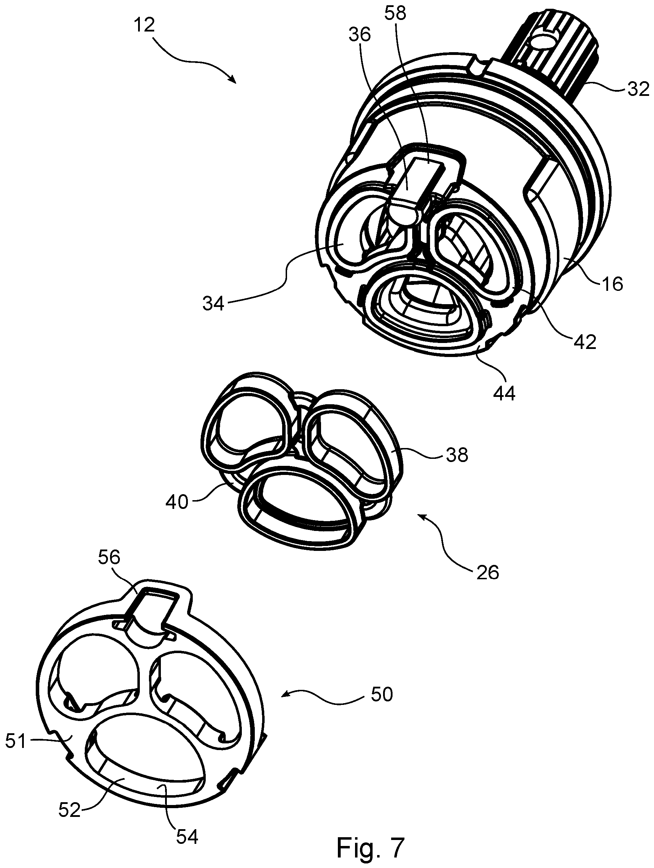

Figs. 5, 6 and 7 show a second embodiment of the valve cartridge 12, wherein structurally or functionally identical or similar elements are referred to by the same reference numbers as before.

The valve cartridge 12 of this second embodiment differs mainly in one aspect: The position pin 36 is placed even further radially outwards and therefore does not have a circular form anymore.

Furthermore, the detailed view of Fig. 6 helps to better understand how the elastic joints 40 bias the sealing confiner element 50 towards its maximum protruding position.

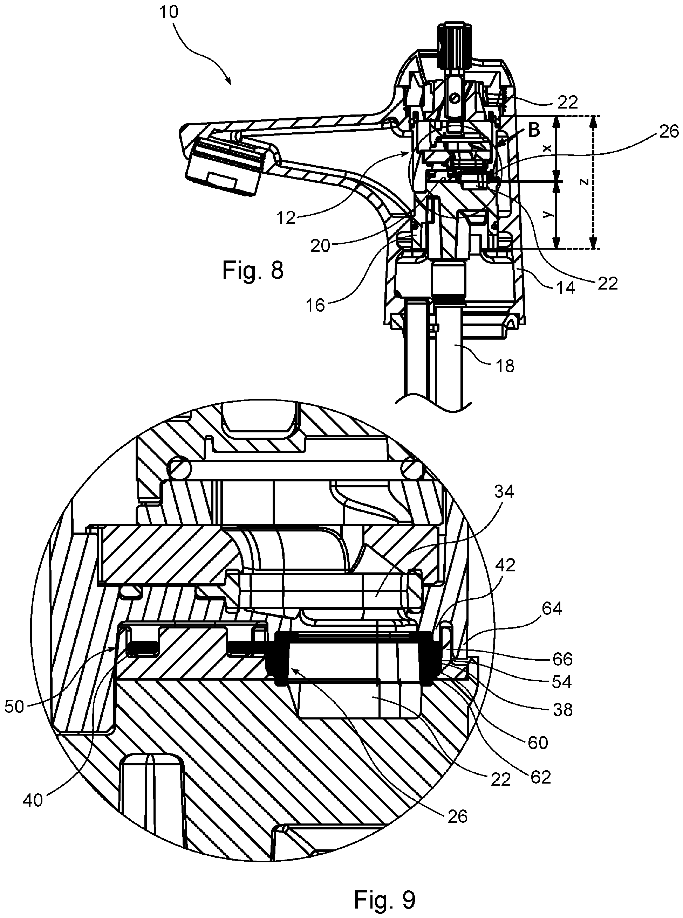

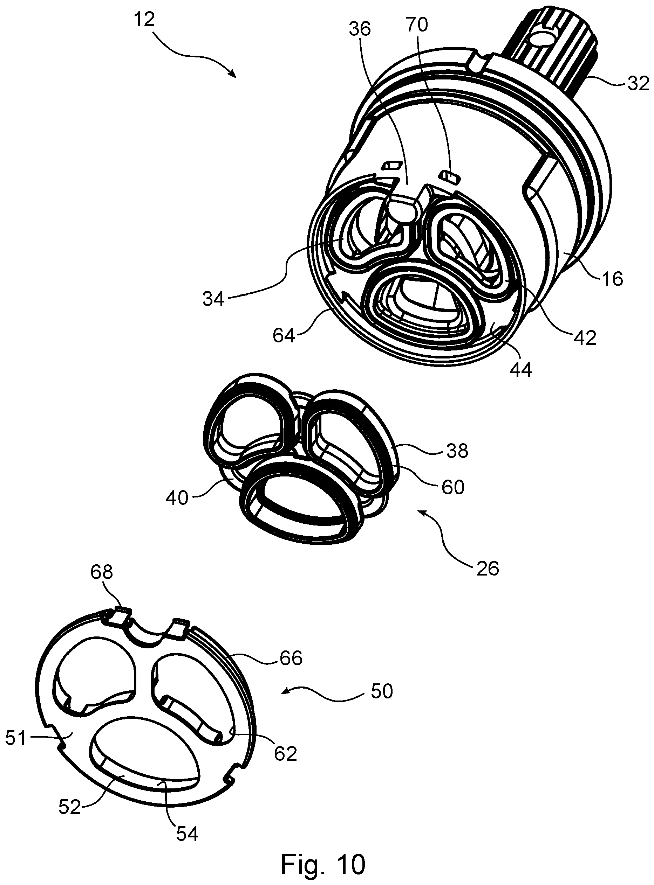

Figs. 8, 9 and 10 show a third embodiment of the valve cartridge 12, wherein again structurally or functionally identical or similar elements are referred to by the same reference numbers as before.

As can be seen from the detailed view in Fig. 9, sealing ring 38 comprise a shoulder 60 on which a projecting collar 62 around the through holes 52 of the sealing confiner element 50 rests. In this case, the sealing confiner element 50 is biased directly by the sealing ring 38, because the shoulder 60 of the sealing ring 38 now provides the biasing force.

Furthermore, the housing main body 16 comprises an outer circumferential sleeve 64 which at least partially surrounds the sealing confiner element 50. Thereby a sleeve part 66 of the sealing confiner element 50 which forms the sidewall 54 may - with its outer side - lean against the outer circumferential sleeve 64 of the housing main body 16. This strengthens the overall design of the valve cartridge 12.

Finally, the snap mechanism for movably attaching the sealing confiner element 50 on the housing main body 16 differs. In this third embodiment the sealing confiner element 50 comprises snap projections 68 which cooperate with openings 70 on the housing main body 16.

## Claims

1. A valve cartridge (12) for a sanitary fitting (10) having
a) a housing main body (16), which has a longitudinal axis (30) and comprises at least one water connection opening (34) at a bottom surface (44), and
b) a sealing ring (38) for fluid tight sealing of the at least one water connection opening (34) against a cartridge seat (20) of the sanitary fitting (10), wherein
c) the valve cartridge (12) comprises a sealing confiner element (50), which is movable relative to the housing main body (16) along the longitudinal axis (30) of the housing main body (16) and which at least partially surrounds the sealing ring (38) such that a transverse movement of the sealing ring (38) is restricted,
**characterized in that**
the sealing ring (38) rests on the bottom surface (44) of the housing main body (16).

2. The valve cartridge according to claim 1, **characterized in that** the sealing confiner element (50) comprises a sleeve part (54; 66) extending longitudinally which transversely confines the sealing ring (38).

3. The valve cartridge according to any of the preceding claims, **characterized in that** the housing main body (16) comprises a sealing support ridge (42) protruding longitudinally from a bottom surface (44) of the housing main body (16), **in that** the sealing ring (38) rests on the sealing support ridge (42) and that the sealing confiner element (50) longitudinally extends along the sealing ring (38) and at least partially along the sealing support ridge (42).

4. The valve cartridge according to any of the preceding claims, **characterized in that** the housing main body (16) comprises a sleeve part (64) which at least partially surrounds a part, in particular the sleeve part (66), of the sealing confiner element (50).

5. The valve cartridge according to any of the preceding claims, **characterized in that** the valve cartridge (12) comprises a biasing mechanism (40; 60, 62) which biases the sealing confiner element (50) away from the housing main body (16).

6. The valve cartridge according to any of the preceding claims, **characterized in that** the valve cartridge (12) comprises at least two water connection openings (34) and a further sealing ring (38) such that the two sealing rings (38) are connected together via an elastic joint (40) and integrally form a bottom sealing unit (26), and **in that** the sealing confiner element (50) is configured to at least partially surround each of the two sealing rings (38).

7. The valve cartridge according to claim 5 and 6, **characterized in that** the biasing mechanism (40; 60, 62) includes the elastic joint (40) to which a part (54) of the sealing confiner element (50) abuts such that the elastic joint (40) biases the sealing confiner element (50) away from the housing main body (16).

8. The valve cartridge according to any of the claims 5 to 7, **characterized in that** the biasing mechanism (40; 60, 62) includes the sealing ring (38) having a radial protruding shoulder (60) and the sealing confiner element (50) having a projection (62) which rests on the shoulder (60) of the sealing ring (62) such that the sealing confiner element (50) is biased away from the housing main body (16).

9. The valve cartridge according to any of the preceding claims, **characterized in that** the housing main body (16) and/or the sealing confiner element (50) comprises a snap structure (56, 58; 68, 70), which allows to snap the sealing confiner element (50) in a movable but captive manner to the housing main body (16).

10. A sanitary fitting (10) comprising a cartridge seat (20) and a valve cartridge (12) according to any of the preceding claims which may be fluid tightly sealed to the cartridge seat (20).

## Patentansprüche

1. Eine Ventilkartusche (12) für eine Sanitärarmatur (10) mit
a) einem Gehäusegrundkörper (16), der eine Längsachse (30) hat und an einer Bodenfläche (44) mindestens eine Wasseranschlussöffnung (34) aufweist, und
b) einem Dichtungsring (38) zum fluiddichten Abdichten der mindestens einen Wasseranschlussöffnung (34) gegen einen Kartuschensitz (20) der Sanitärarmatur (10),
wobei
c) die Ventilkartusche (12) ein Dichtungsbegrenzungselement (50) aufweist, das relativ zum Gehäusegrundkörper (16) entlang der Längsachse (30) des Gehäusegrundkörpers (16) beweglich ist und das den Dichtungsring (38) zumindest teilweise umgibt, so dass eine transversale Bewegung des Dichtungsrings (38) begrenzt ist,
**dadurch gekennzeichnet, dass**
d) der Dichtungsring (38) auf der Bodenfläche (44) des Gehäusegrundkörpers (16) ruht.

2. Die Ventilkartusche nach Anspruch 1, **dadurch gekennzeichnet, dass** das Dichtungsbegrenzungselement (50) ein sich in Längsrichtung erstreckendes Hülsenteil (54; 66) umfasst, das den Dichtungsring (38) in transversaler Richtung begrenzt.

3. Die Ventilkartusche nach einem der vorherigen Ansprüche, **dadurch gekennzeichnet, dass** der Gehäusegrundkörper (16) einen von einer Bodenfläche (44) des Gehäusegrundkörpers (16) in Längsrichtung abstehenden Dichtungsstützsteg (42) aufweist, dass der Dichtungsring (38) auf dem Dichtungsstützsteg (42) aufliegt und dass sich das Dichtungsbegrenzungselement (50) in Längsrichtung entlang des Dichtungsrings (38) und zumindest teilweise entlang des Dichtungsstützstegs (42) erstreckt.

4. Die Ventilkartusche nach einem der vorherigen Ansprüche, **dadurch gekennzeichnet, dass** der Gehäusegrundkörper (16) ein Hülsenteil (64) aufweist, das einen Teil, insbesondere das Hülsenteil (66), des Dichtungsbegrenzungselements (50) zumindest teilweise umschließt.

5. Die Ventilkartusche nach einem der vorherigen Ansprüche, **dadurch gekennzeichnet, dass** die Ventilkartusche (12) einen Vorspannmechanismus (40; 60, 62) aufweist, der das Dichtungsbegrenzungselement (50) von dem Gehäusegrundkörper (16) weg vorspannt.

6. Die Ventilkartusche nach einem der vorherigen Ansprüche, **dadurch gekennzeichnet, dass** die Ventilkartusche (12) mindestens zwei Wasseranschlussöffnungen (34) und einen weiteren Dichtungsring (38) aufweist, wobei die beiden Dichtungsringe (38) über eine elastische Verbindung (40) miteinander verbunden sind und einstückig eine Bodendichtungseinheit (26) ausbilden, und dass das Dichtungsbegrenzungselement (50) so ausgebildet ist, dass es jeden der beiden Dichtungsringe (38) zumindest teilweise umgibt.

7. Die Ventilkartusche nach Anspruch 5 und 6, **dadurch gekennzeichnet, dass** der Vorspannmechanismus (40; 60, 62) die elastische Verbindung (40) umfasst, an der ein Teil (54) des Dichtungsbegrenzungselements (50) anliegt, sodass die elastische Verbindung (40) das Dichtungsbegrenzungselement (50) vom Gehäusegrundkörper (16) weg vorspannt.

8. Die Ventilkartusche nach einem der Ansprüche 5 bis 7, **dadurch gekennzeichnet, dass** der Vorspannmechanismus (40; 60, 62) umfasst, dass der Dichtungsring (38) eine radial vorstehende Schulter (60) hat und das Dichtungsbegrenzungselement (50) einen Vorsprung (62) hat, der auf der Schulter (60) des Dichtungsrings (62) aufliegt, sodass das Dichtungsbegrenzungselement (50) vom Gehäusegrundkörper (16) weg vorgespannt wird.

9. Die Ventilkartusche nach einem der vorhergehenden Ansprüche, **dadurch gekennzeichnet, dass** der Gehäusegrundkörper (16) und/oder das Dichtungsbegrenzungselement (50) eine Schnappstruktur (56, 58; 68, 70) aufweisen, die es ermöglicht, das Dichtungsbegrenzungselement (50) beweglich, aber unverlierbar am Gehäusegrundkörper (16) einzurasten.

10. Eine Sanitärarmatur (10) mit einem Kartuschensitz (20) und einer Ventilkartusche (12) nach einem der vorhergehenden Ansprüche, die mit dem Kartuschensitz (20) fluiddicht verbunden werden kann.

## Revendications

1. Cartouche de robinet (12) pour un raccord sanitaire (10) ayant
a) un corps principal de logement (16) qui a un axe longitudinal (30) et comprend au moins une ouverture de connexion à l'eau (34) au niveau d'une surface inférieure (44), et
b) une bague d'étanchéité (38) pour étanchéifier de manière étanche au fluide l'au moins une ouverture de connexion à l'eau (34) contre un siège de cartouche (20) du raccord sanitaire (10), dans laquelle
c) la cartouche de robinet (12) comprend un élément de confinement d'étanchéité (50) qui est mobile par rapport au corps principal de logement (16) le long de l'axe longitudinal (30) du corps principal de logement (16) et qui entoure au moins partiellement la bague d'étanchéité (38) de sorte qu'un mouvement transversal de la bague d'étanchéité (38) est restreint,
**caractérisée en ce que**
la bague d'étanchéité (38) repose sur la surface inférieure (44) du corps principal de logement (16).

2. Cartouche de robinet selon la revendication 1, **caractérisée en ce que** l'élément de confinement d'étanchéité (50) comprend une partie de manchon (54 ; 66) s'étendant longitudinalement qui confine transversalement la bague d'étanchéité (38).

3. Cartouche de robinet selon l'une quelconque des revendications précédentes, **caractérisée en ce que** le corps principal de logement (16) comprend une cannelure de support d'étanchéité (42) faisant saillie longitudinalement depuis une surface inférieure (44) du corps principal de logement (16), **en ce que** la bague d'étanchéité (38) repose sur la cannelure de support d'étanchéité (42), et que l'élément de confinement d'étanchéité (50) s'étend longitudinalement le long de la bague d'étanchéité (38) et au moins partiellement le long de la cannelure de support d'étanchéité (42).

4. Cartouche de robinet selon l'une quelconque des revendications précédentes, **caractérisée en ce que** le corps principal de logement (16) comprend une partie de manchon (64) qui entoure au moins partiellement une partie, notamment la partie de manchon (66), de l'élément de confinement d'étanchéité (50).

5. Cartouche de robinet selon l'une quelconque des revendications précédentes, **caractérisée en ce que** la cartouche de robinet (12) comprend un mécanisme d'inclinaison (40 ; 60, 62) qui incline l'élément de confinement d'étanchéité (50) à l'écart du corps principal de logement (16).

6. Cartouche de robinet selon l'une quelconque des revendications précédentes, **caractérisée en ce que** la cartouche de robinet (12) comprend au moins deux ouvertures de connexion à l'eau (34) et une autre bague d'étanchéité (38) de sorte que les deux bagues d'étanchéité (38) sont connectées ensemble par le biais d'un joint élastique (40) et forment intégralement une unité d'étanchéité inférieure (26), et **en ce que** l'élément de confinement d'étanchéité (50) est configuré pour entourer au moins partiellement chacune des deux bagues d'étanchéité (38).

7. Cartouche de robinet selon les revendications 5 et 6, **caractérisée en ce que** le mécanisme d'inclinaison (40 ; 60, 62) inclut le joint élastique (40) contre lequel une partie (54) de l'élément de confinement d'étanchéité (50) bute de sorte que le joint élastique (40) incline l'élément de confinement d'étanchéité (50) à l'écart du corps principal de logement (16).

8. Cartouche de robinet selon l'une quelconque des revendications 5 à 7, **caractérisée en ce que** le mécanisme d'inclinaison (40 ; 60, 62) inclut la bague d'étanchéité (38) ayant un épaulement saillant radial (60) et l'élément de confinement d'étanchéité (50) ayant une saillie (62) qui repose sur l'épaulement (60) de la bague d'étanchéité (62) de sorte que l'élément de confinement d'étanchéité (50) est incliné à l'écart du corps principal de logement (16).

9. Cartouche de robinet selon l'une quelconque des revendications précédentes, **caractérisée en ce que** le corps principal de logement (16) et/ou l'élément de confinement d'étanchéité (50) comprend une structure d'encliquetage (56, 58 ; 68, 70) qui permet d'encliqueter l'élément de confinement d'étanchéité (50) de manière mobile mais captive sur le corps principal de logement (16).

10. Raccord sanitaire (10) comprenant un siège de cartouche (20) et une cartouche de robinet (12) selon l'une quelconque des revendications précédentes qui peut être scellée de manière étanche au fluide au siège de cartouche (20).
